Europäisches Patentamt

European Patent Office

Office européen des brevets

(19)

(11) EP 0 510 997 B1

(12) **EUROPEAN PATENT SPECIFICATION**

(45) Date of publication and mention
of the grant of the patent:
**14.08.1996 Bulletin 1996/33**

(51) Int Cl.⁶: **H01P 1/175**, H01Q 1/24

(21) Application number: **92303706.3**

(22) Date of filing: **24.04.1992**

(54) **Satellite broadcasting receiving system**

Satellitenrundfunk-Empfangssystem

Système de réception pour radiodiffusion par satellites

(84) Designated Contracting States:
**DE GB**

(30) Priority: **24.04.1991 JP 122722/91**

(43) Date of publication of application:
**28.10.1992 Bulletin 1992/44**

(73) Proprietor: **SHARP KABUSHIKI KAISHA**
**Osaka 545 (JP)**

(72) Inventor: **Somei, Junichi**
**Yamatokooriyama-shi, Nara-ken (JP)**

(74) Representative: **Brown, Kenneth Richard et al**
**R.G.C. Jenkins & Co.**
**26 Caxton Street**
**London SW1H 0RJ (GB)**

(56) References cited:
EP-A- 0 314 930         EP-A- 0 361 672
DE-A- 4 132 287         US-A- 3 684 983
US-A- 4 538 175         US-A- 4 554 552

• 19TH EUROPEAN MICROWAVE CONFERENCE-
  PROCEEDINGS;4-7 September 1989,London,GB
  MICROWAVE EXHIBITIONS AND PUBLISHERS
  LTD, Tunbridge Wells,GB,1989 J.R. FORREST:
  "Satellite television: the challenges of a
  microwave mass-market" pages 29-38
• PATENT ABSTRACTS OF JAPAN vol. 13, no. 413
  (E-820)12 September 1989& JP-A-11 52 822
• PATENT ABSTRACTS OF JAPAN vol. 8, no. 139
  (E-253)(1576) 28 June 1984& JP-A-59 047 801

## Description

Satellite Broadcast Receiving System

## BACKGROUND OF THE INVENTION

Field of the Invention

The present invention relates to a satellite broadcast receiving system, and more particularly, to a satellite broadcast receiving system capable of selectively receiving a horizontally polarized radio wave and a vertically polarized radio wave from a broadcast satellite and a control circuit for controlling a polarization switching device (polarizer) for switching a plane of polarization of a received radio wave in the receiving system.

Description of the Background Art

In conventional satellite broadcasting, planes of polarization are alternately set to be horizontal and vertical for respective channels such that horizontally polarized radio waves are used as radio waves of odd-numbered channels and vertically polarized radio waves are used as radio waves of even-numbered channels in order to prevent radio interference among broadcast radio waves of a plurality of channels. Such a satellite broadcast receiving system, selectively receiving broadcast radio waves of a plurality of channels from a broadcast satellite, is provided with a polarization switching device for switching a plane of polarization of a received radio wave to allow both of the horizontally polarized and vertically polarized radio waves to be received by a single system.

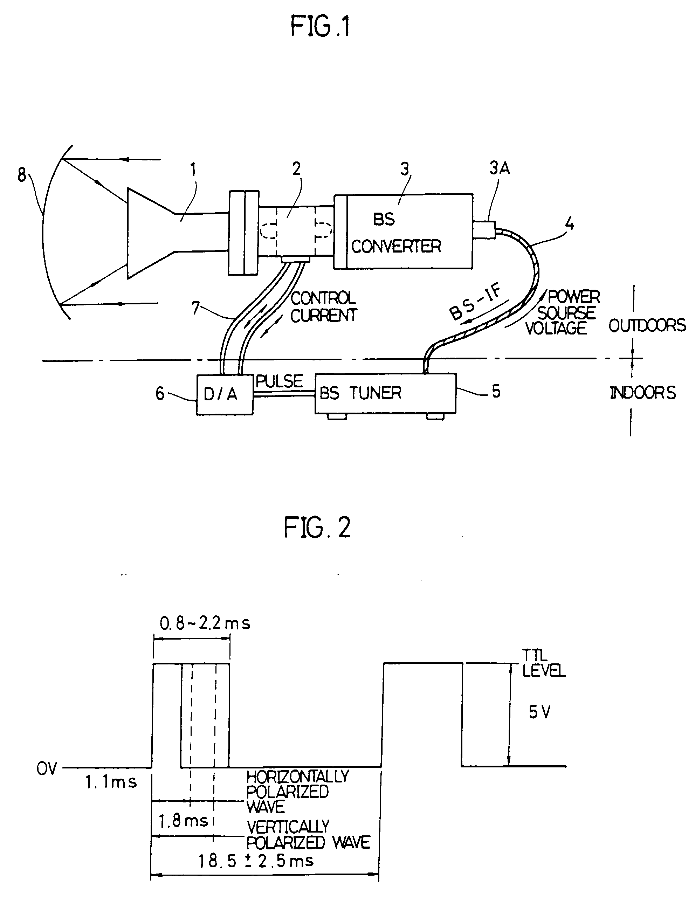

Fig. 1 is a diagram schematically showing the structure of a conventional satellite broadcast receiving system. With reference to Fig. 1, a horizontally polarized radio wave and a vertically polarized radio wave from a broadcast satellite (not shown) are reflected by a parabola antenna 8 to enter a primary feed horn 1 of waveguide type. The radio wave incident on the primary feed horn 1 is introduced to a polarization switching device 2 for switching a plane of the polarization of the received radio wave in accordance with a desired channel. The cylindrical polarization switching device 2 has a known polarizer (shown by the dotted line) provided therein, which polarizer includes a winding wound around a ferrite core. The polarizer has a revolution angle changed by a current flowing through the coil. Switching between the planes of horizontal polarization and vertical polarization of the received radio wave can be made by controlling the revolution angle of the polarizer to be 0° and 90°, in particular. JP-A-11 52 822 discloses a drive circuit for a Ferrite Polarizer.

The radio wave whose plane of polarization is changed by the polarization switching device 2 is further supplied to a satellite broadcast receiving converter (hereinafter referred to as BS converter) 3. The BS converter 3 is a low noise BS converter comprising an input waveguide portion and a conductor portion provided therein, thereby changing the frequency of the received high frequency radio wave of 12GHz band into an intermediate frequency signal of 1GHz band (hereinafter referred to as BS-IF signal).

The BS-IF signal output from the BS converter 3 is supplied from its output connecter 3A to an indoor tuner for receiving satellite broadcasts (hereinafter referred to as BS tuner) through a coaxial cable 4. A power source voltage (for example, DC15V) is supplied from the BS tuner 5 to the BS converter 3 through the coaxial cable 4.

The switching of the plane of the polarization by the polarization switching device 2 as described above is controlled in response to a digital control signal supplied from the BS tuner 5. More specifically, the digital control signal supplied from the BS tuner 5 is a pulse signal having a pulse width of 1.1ms when receiving a horizontally polarized radio wave and a pulse width of 1.8ms when receiving a vertically polarized radio wave, with an amplitude of 5V at a TTL level. The pulse signal is supplied to a D/A converter 6 which detects the pulse width of the applied pulse signal to generate a control current according to the detected pulse width and supply the control current to the coil (not shown) of the polarizer in the polarization switching device 2 through a dedicated cable 7. For example, the revolution angle of the polarizer can be switched between the angles of 0° and 90° by inverting the direction of the control current between reception of a horizontally polarized radio wave and reception of a vertically polarized radio wave, in accordance with the pulse width of the detected pulse signal.

The satellite broadcasting receiving system shown in Fig. 1, however, requires complicated installation because the cable 4 for power sour voltage and a BS-IF signal and the polarizer controlling cable 7 should be extracted outdoors from the indoor BS tuner 5 and D/A converter 6.

The control current supplied from the D/A converter 6 to the polarization switching device 2 through the control capable 7 is especially susceptible to a cable length and an outside air temperature. A variation in the control current due to such effects changes the revolution angle of the polarizer to prevent a reliable switching of the plane of the polarization of the received radio wave, which might result in a significant deterioration of receiving performance of the entire system.

In addition, as shown in Fig. 1, the conventional satellite broadcast receiving system including an outdoor unit structured by connecting the primary feed horn 1, the polarization switching device 2 and the BS converter 3, which are separate components, requires these components to be connected at the installation of the system. As a result, the installation has been made complicated, while the structure of the entire outdoor unit has been made large in scale.

Even if the revolution angle of the polarizer is accurate, deviation in the attachment angle of the same at the time of installation of the receiving system prevents reliable switching of a plane of polarization, causing degradation of image.

## SUMMARY OF THE INVENTION

The present invention provides a control circuit for controlling the revolution of a polarizer having a polarization switching function in a satellite broadcast receiving system, the control circuit comprising: resistor means provided in a path for supplying current to the coil of the polarizer, for determining the amount of the current supply to the coil according to a potential difference between both ends of the resistor means; means for applying first and second variable potentials to said ends of the resistor means, respectively; and means for driving the potential applying circuit in response to an externally supplied control signal to adjust the first and the second potentials.

According to the present invention, it is possible to adjust a deviation of a revolution angle of a polarizer, due to a deviation of its attachment angle in the satellite broadcast receiving system, using a signal from an indoor unit.

An advantage of the present invention is that reliable switching between a horizontally polarized wave receiving state and a vertically polarized wave receiving state can be made by adjusting a control signal to the polarization switching device, thereby adjusting the revolution angle of the polarizer even when the outdoor unit is installed with a deviation from the horizontal plane.

## BRIEF DESCRIPTION OF THE DRAWINGS

Fig. 1 is a schematic block diagram showing a structure of a conventional satellite broadcast receiving system.

Fig. 2 is a waveform diagram showing a control pulse signal for switching a plane of polarization.

Fig. 3 is a schematic block diagram showing a satellite broadcast receiving system according to one embodiment of the present invention.

Fig. 4 is a block diagram specifically showing the structure of the satellite broadcast receiving system shown in Fig. 3.

Fig. 5 is a circuit diagram specifically showing an interface portion shown in Fig. 4.

Fig. 6 is a waveform diagram showing a signal output from the interface portion of Fig. 5.

Fig. 7 is a graph showing a relationship between the amount of current flowing through a coil of a polarizer and a revolution angle.

Fig. 8 is a table showing a relationship among a pulse width of a control pulse signal of the polarizer, a current of the coil of the polarizer and a revolution angle of the polarizer.

Fig. 9 is a circuit diagram showing the structure of a constant current driving portion shown in Fig. 4 in an example which is useful for understanding the present invention.

Fig. 10 is a circuit diagram showing a control unit portion of a BS converter according to the embodiment of the present invention.

Fig. 11 is a diagram showing an operation characteristic of an operational amplifier shown in Fig. 10.

## DESCRIPTION OF THE PREFERRED EMBODIMENT

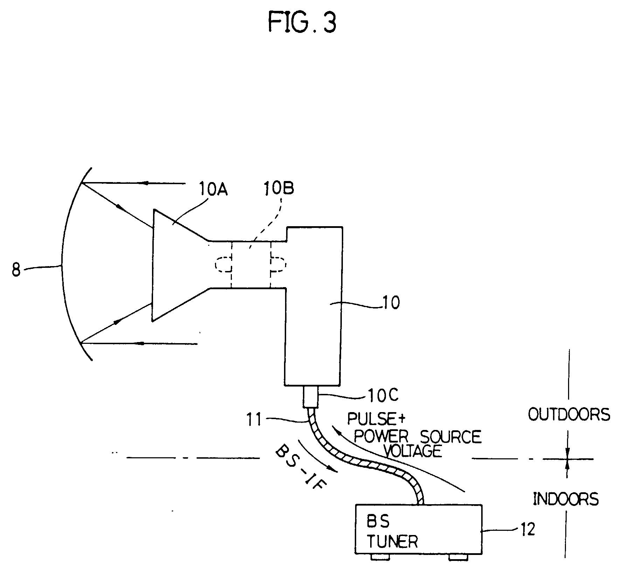

Fig. 3 is a diagram schematically showing the structure of a satellite broadcasting receiving system according to one embodiment of the present invention. With reference to Fig. 3, a BS converter 10 contains a primary feed horn 10A and a polarization switching device 10B which integrally form an outdoor unit. A BS-IF signal is supplied from an output connector 10C of the BS converter 10 to an indoor BS tuner 12 through a coaxial cable 11, while a power source voltage and a pulse signal for switching a plane of polarization are supplied from the BS tuner 12 to the BS converter 10 through the coaxial cable 11.

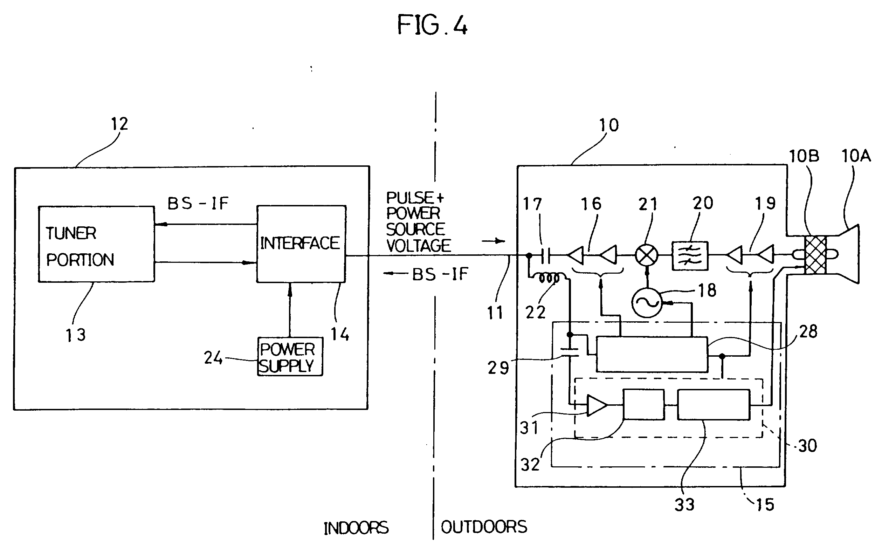

Fig. 4 is block diagram specifically illustrating the satellite broadcast receiving system shown in Fig. 3. With reference to Fig. 4, the BS tuner 12 comprises a tuner portion 13, an interface portion 14 and a power source 24. First, the tuner portion 13 selects a desired channel and outputs a pulse signal (see Fig. 2) having a pulse width according to the selection to supply the signal to the interface portion 14. The interface portion 14 superimposes the pulse signal on the power supply voltage (DC15V) supplied from the power source 24 to supply the obtained signal to the BS converter 10, and outputs the BS-IF signal supplied from the BS converter 10 to the tuner portion 13.

Since the pulse signal supplied from the tuner portion 13 to the interface portion 14 has an amplitude of 5V at a TTL level, the signal adversely affects the BS converter 10 when superimposed as it is on the power source voltage 15V to exceed an allowable voltage range of the BS converter 10. The interface portion 14 therefore converts the pulse signal voltage level from 5V into 0.6-0.7V. The interface portion 14 will be described in detail later. No detailed description will be made of the tuner portion 13 which is a well-known circuit.

With further reference to Fig. 4, while the power source voltage with the pulse signal superimposed thereon, supplied from the BS tuner 12 to the BS converter 10 through the coaxial cable 11, is supplied to a power source portion 15 through a coil 22, a coupling capacitor 17 cuts off the power source voltage and prevents the same from being supplied to an IF amplifier 16. The power source voltage and the pulse signal supplied to the power source portion 15 are applied to a power source supply portion 28 which supplies a power source to an IF amplifier 16, a local oscillator 18 and a low noise high frequency amplifier 19 in response thereto.

The pulse signal superimposed on the power source voltage is extracted by a coupling capacitor 29 and applied to a control unit portion 30. The control unit portion 30 generates a control current corresponding to a pulse width of the applied pulse signal and supplies the same to the coil of the polarizer constituting the polarization switching device 10B. The control unit portion 30 comprises a differential amplifier 31, a D/A converter 32 and a constant current driving portion 33. The pulse signal applied to the control unit portion 30 is converted into a control voltage corresponding to the pulse width by the differential amplifier 31 and the D/A converter 32, which control voltage is applied to the constant current driving portion 33. The constant current driving portion 33 generates a constant control current in accordance with the control voltage, thereby controlling the revolution angle of the polarizer. The constant current driving portion 33 will be described in detail later.

The signal received through the primary feed horn 10A and the polarization switching device 10B is mixed by a mixer 21 with a local oscillation signal supplied from the local oscillator 18 and converted into an IF signal after passing through the low noise high frequency amplifier 19 and a bandpass filter 20, which signal is supplied as the output of the BS converter 10 through the IF amplifier 16. Since the BS-IF signal from the IF amplifier 16 is cut off by the coupling coil 22, it is not supplied to the power source portion 15. The BS-IF signal is therefore output from the BS converter 10 without loss.

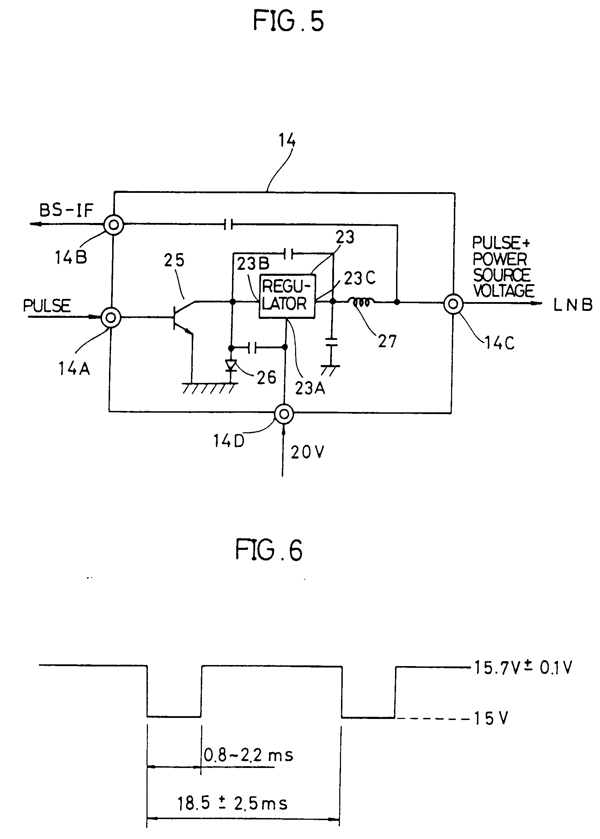

Fig. 5 is a circuit diagram specifically showing the interface portion 14 shown in Fig. 4. With reference to Fig. 5, the BS-IF signal supplied from the BS converter 10 of Fig. 4 is applied to an output terminal 14B through an input/output terminal 14C and further supplied to the tuner portion 13. Since the BS-IF signal input through the input/output terminal 14C is cut off by a coupling coil 27, it is not supplied to the output of a 3-terminal regulator 23 which will be described later. The BS-IF signal is therefore output from the output terminal 14B without loss.

The pulse signal (see Fig. 2) supplied from the tuner portion 13 of Fig. 4 is applied to the base of a switching transistor 25 through an input/output terminal 14A. The power supply voltage (DC20V) from the direct current power source portion 24 is applied to an input voltage terminal 23A of the 3-terminal regular 23 through a power source terminal 14D. A reference voltage terminal 23B of the 3-terminal regulator 23 is connected to the collector of the above-described switching transistor 25, the emitter of which transistor is grounded. An output terminal 23C of the 3-terminal regulator 23 is connected to an input terminal 14C through the coupling coil 27.

Herein, in response to an application of such a pulse signal as shown in Fig. 2 to the base of the switching transistor 25 from the tuner portion 13 through the input/output terminal 14A, the switching transistor 25 turns on while the pulse signal is at a high level, and the potential at the reference voltage terminal 23B of the 3-terminal regulator 23 attains 0V, thereby outputting a power source voltage of 15V from the output terminal 23C.

When the pulse signal is at a low level, the switching transistor 25 turns off and the reference voltage terminal 23B of the 3-terminal regulator 23 is grounded through a silicon diode 26, whereby the reference voltage terminal 23B of the 3-terminal regulator 23 attains a potential of about 0.7V, thereby outputting a voltage of about 15.7V from the output terminal 23C. In other words, the 3-terminal regulator 23 outputs a signal having a waveform with a pulse signal having an amplitude of about 0.7V superimposed on a power source voltage of 15V as shown in Fig. 6. Herein, the frequency of the pulse signal is approximately 40-50Hz, which is so much smaller than the BS-IF signal frequency of 950-1700MHz and the local oscillation signal frequency of 10GHz to affect the transmission of the BS-IF signal.

As described in the foregoing, the satellite broadcast receiving system includes the BS converter 10 containing the primary feed horn 10A and the polarization switching device 10B, and a single coaxial cable between the BS converter 10 and the BS tuner 12 for supplying a power source voltage to the BS converter 10, a control signal to the polarization switching device 10B and a BS-IF signal to the BS tuner 12, thereby allowing the outdoor unit to be made smaller in scale and an installation of the satellite broadcasting receiving system to be simplified. In addition, since a control signal is supplied from the BS tuner 12 to the polarization switching device 10B in the form of a digital signal, this signal is not susceptible to a cable loss and an outside air temperature, so that a reliable control of the polarization switching device can be achieved and accordingly, the receiving performance of the satellite broadcasting receiving system can be improved.

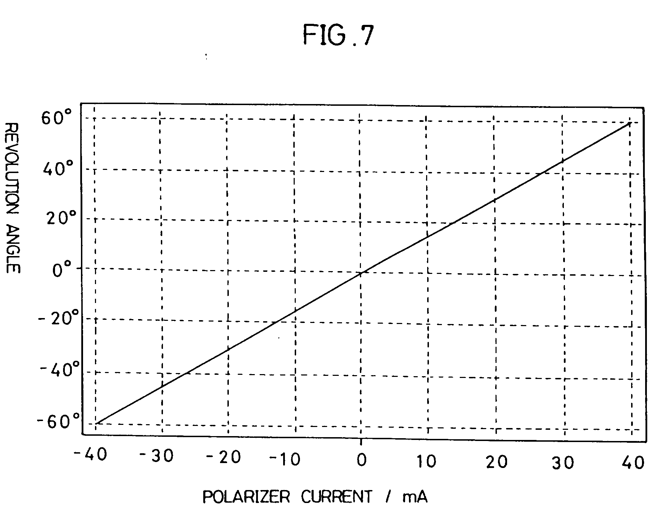

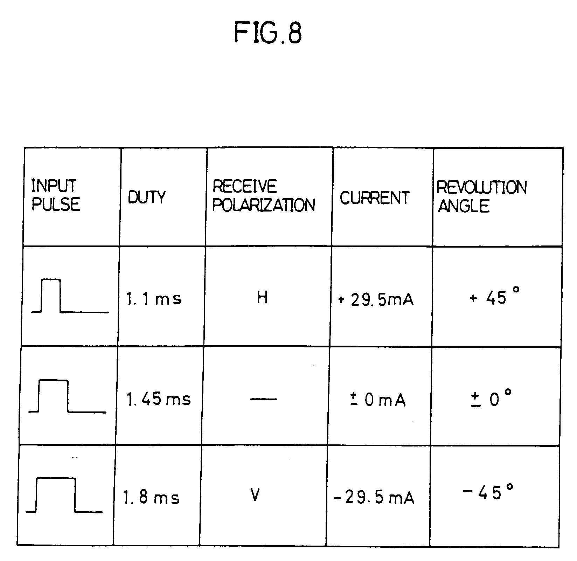

The polarizer constituting the polarization switching device 10B has its revolution direction switched by a change of the direction of the current flowing through the coil wound around the ferrite core by using Faraday revolution and its revolution angle changed according to the amount of the current flowing through the coil. Fig. 7 is a graph showing a relationship between the amount of current (abscissa) flowing through the coil of the polarizer and a revolution angle (ordinate) of the polarizer. Fig. 8 is a table showing a relationship among various pulse widths of a control pulse signal of the polarizer, current values flowing through the coil of the polarizer corresponding the pulse widths and revolution angles thereof.

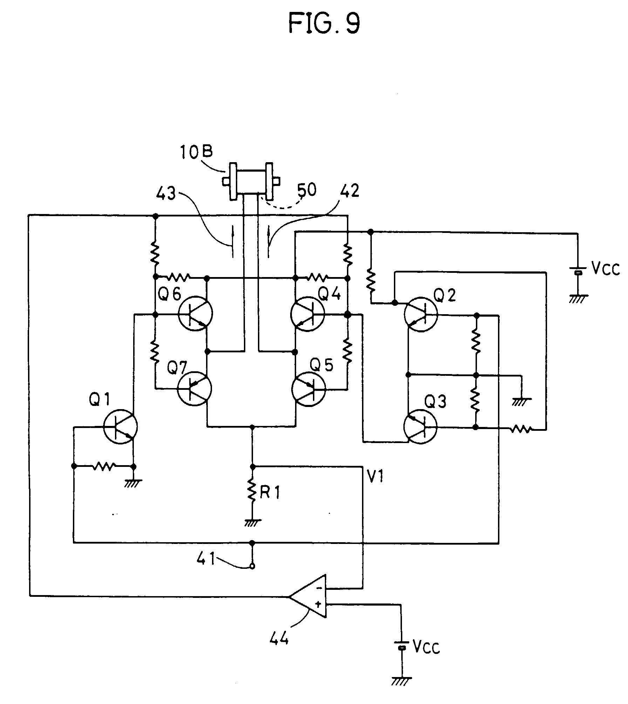

As previously described with reference to Fig. 4, such control of the revolution angle of the polarizer is made by the constant current driving portion 33 in the BS converter 10. Fig. 9 is a circuit diagram specifically showing one example of the constant current driving portion 33, which is useful for understanding the present invention.

With reference to Fig. 9, a switching terminal 41 of the constant current driving portion 33 is supplied, from the D/A converter 32 of Fig. 4, with a control voltage corresponding to a pulse width of a control signal. That is, when receiving a horizontally polarized radio wave, the D/A converter 32 generates a low level control voltage and applies the same to the switching terminal 41 in response to a control pulse signal having a pulse width of 1.1ms and when receiving a vertically polarized radio wave, the converter generates a high level control voltage and applies the same to the switching terminal 41 in response to a control pulse signal having a pulse width of 1.8ms.

Such high/low level switching signal is supplied to the bases of transistors Q1 and Q2 through the switching terminal 41. In other words, when receiving a vertically polarized radio wave, both of the transistors Q1 and Q2 turn on, so that the collector potentials of the respective transistors approximate to become 0. As a result, transistors Q3, Q5 and Q6 turn off, while transistors Q4 and Q7 turn on, whereby a current flows through a coil 50 of the polarizer 10B in a direction indicated by arrow 42. When receiving a horizontally polarized radio wave, both of the transistors Q1 and Q2 turn off and consequently a current flows through the coil 50 of the polarizer 10B in a direction indicated by arrow 43.

An operational amplifier 44 of Fig. 9 has a positive input supplied with a constant reference voltage and an output fedback to a negative input to form a non-inversion feedback circuit. That is, the current supplied to the coil 50 of the polarizer 10B flows to the ground potential through a resistor R1 after passing through the coil 50. At this time, by applying the voltage V1 produced at the upper end of the resistor R1 to the negative input of the operational amplifier 44, the voltage V1 maintains the same potential as the reference potential Vcc of the positive input. As a result, the current applied to the coil 50 of the polarizer 10B is controlled by the voltage V1, thereby holding the current flowing through the coil 50 constant even if the resistance value of the coil 50 is changed due to a temperature change.

Herein, the revolution angle of the polarizer should be switched to 0° or 90° in accordance with the plane of polarization of the received radio wave as described above. The above-described constant current driving portion 33 enables the angle difference to be constantly maintained at 90° irrespective of the outside temperature.

At the time of installing a satellite broadcasting receiving system, however, it is almost impossible to set a parabola antenna to be constantly in parallel or vertically with respect to the horizontal plane. In fact, a person in charge of installing the system sets up the system while checking the image on a monitoring television set or a C/N meter. Some installation sites, however, inevitably require an installation work to be done without checking a monitor. In such a case, an outdoor unit might be installed with its angle deviated. Such a deviation in angle prevents a reliable switching between a horizontally polarized wave and a vertically polarized wave, thereby causing a deterioration of image. Such deterioration in image is supposed to be acute when it rains.

The feature of the embodiment of the present invention to be described in the following is directed to correcting a deviation of the revolution angle of the polarizer, which is caused by a deviation of an installation angle of the outdoor unit, by a signal from the indoor unit.

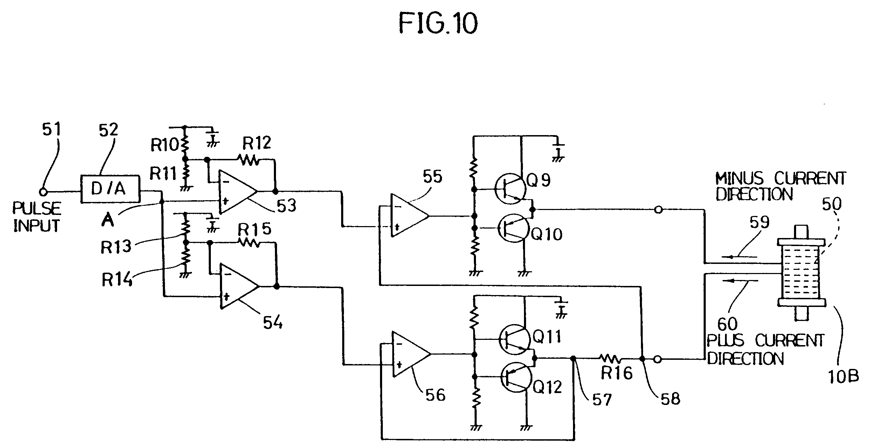

Fig. 10 is a circuit diagram showing a control unit portion of the BS converter according to the embodiment of the present invention. With reference to Fig. 10, a control pulse signal superimposed on a power source voltage, which is transmitted from the indoor BS tuner (not shown), is separated and amplified by a differential amplifier (31 in Fig. 4) and then input to a D/A converter 52 through an input terminal 51. The D/A converter 52 generates a voltage corresponding to the pulse width of the control pulse signal and applies the same to the positive inputs of operational amplifiers 53 and 54.

The control pulse signal has a pulse width of 1.1ms in a case of a horizontally polarized radio wave and has a pulse width of 1.8ms in a case of a vertically polarized radio wave as previously described with reference to Fig. 2 and the D/A conversion output voltage at the point (A) of Fig.10 is in the range from 1.0 to 3.5V. The voltage produced across the both ends of a resistor R16 should be variable in order to adjust the revolution angle of the polarizer 10B, that is, in order to change the amount of the current flowing through the polarizer 10B, for which the operational amplifiers 53 and 54 having gains different from each other are used in the embodiment of Fig. 10.

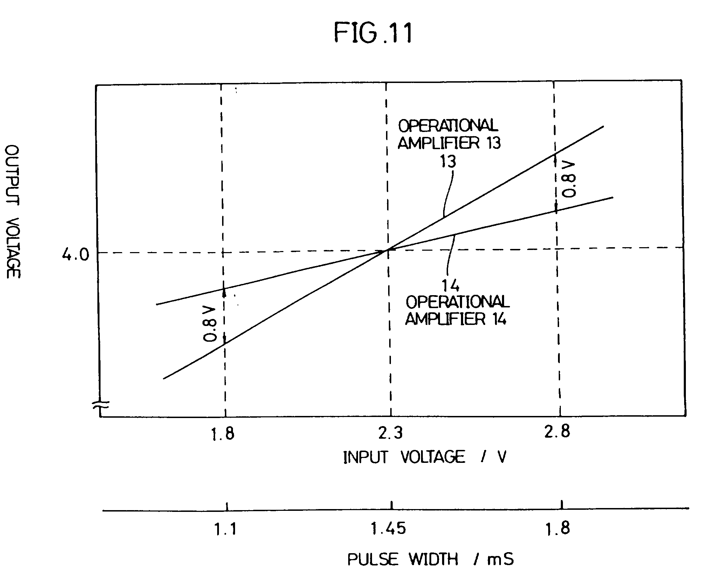

More specifically, Fig. 11 is a diagram showing output voltage characteristics of the operational amplifiers 53 and 54 of Fig. 10 with respect to input voltages, respectively. A gain G13 of the operational amplifier 53 will be expressed by the following equation:

$$G13 = 1 + R12 \, (R10 + R11) \, / \, R10 \cdot R11.$$

A gain G14 of the operational amplifier 54 will be expressed by the following equation:

$$G14 = 1 + R15 \, (R13 + R14) \, / \, R13 \cdot R14.$$

By setting these gains so as to establish a relationship of G13 > G14, such linear input/output characteristics as shown in Fig. 11 can be obtained.

With reference to Fig. 11, when the control pulse applied to the input terminal 51 has a pulse width of 1.45ms, the output voltage of the D/A converter 52, that is, the input voltage to the operational amplifiers 53 and 54 becomes 2.3V, while the output voltages of the operational amplifiers 53 and 54 equally become 4.0V. The output potential difference between the operational amplifiers 53 and 54 is bisymmetrically expanded about the output voltage of 0.4V as a center point. The potential difference becomes 0.8V at the pulse width of 1.1ms of the control pulse (reception of a horizontally polarized wave) and the difference similarly becomes 0.8V at a control pulse width of 1.8ms (reception of a vertically polarized wave).

The output voltages of the operational amplifiers 53 and 54 are input to positive inputs (non-inversion input terminals) of operational amplifiers 55 and 56 in the subsequent stage, respectively. As a result, a control voltage corresponding to the input voltages to the non-inversion input terminals is applied to both ends 57 and 58 of the resistor R16.

More specifically, the operational amplifiers 55 and 56 operate as non-inversion feedback circuits, whereby the node 57 maintains a potential higher by 0.8V than the potential at the node 58 when the control pulse width is 1.1ms. At this time, transistors Q10 and Q11 turn on and transistors Q9 and Q12 turn off to flow the current toward the minus direction shown in Fig. 10. Conversely, the node 58 maintains a potential higher by 0.8V than the potential at the node 57 when the control pulse width is 1.8ms. At this time, the transistors Q10 and Q11 turn off and the transistors Q9 and Q12 turn on to flow the current toward the plus direction shown in Fig. 10. When the control pulse width is 1.45ms, the input voltages of the operational amplifiers 55 and 56 become equal to each other and the potentials at the nodes 57 and 58 become equal to each other accordingly. No current flows to the polarizer 10B as a result. In each case set forth above where the value of the current flowing through the polarizer 10B is determined by the resistance value R16, the current value can be arbitrarily set according to a type of the polarizer 10B by appropriately selecting the resistance value.

For fine-adjusting the revolution angle of the polarizer 10B, a control pulse width is adequately changed to change the output potential difference, that is, the potential difference between the nodes 57 and 58, thereby changing the value of the current flowing through the coil 50 of the polarizer 10B in consideration of a linear change of the output potential difference between the operational amplifiers 53 and 54 in accordance with the control pulse width as shown in Fig. 11.

With a parabola antenna properly set, the optimum control pulse width at the reception of a horizontally polarized radio wave is 1.1ms as shown in Fig. 2. If the antenna is set with a deviation of about 5°, for example, due to a deviation caused by setting, the control pulse width should be selected to be 1.05ms. More specifically, when the control pulse width is 1.05ms, the potential difference between the operational amplifiers 53 and 54 becomes about 0.9V, and the value of the current flowing through the coil 50 of the polarizer 10B is accordingly increased to further rotate the polarizer by about 5°. For maintaining a difference between a revolution angle of a horizontally polarized wave reception and that of a vertically polarized wave reception at 90°, the control pulse width in each reception should be maintained at 0.7ms. Therefore, with the control pulse width at the reception of the vertically polarized radio wave selected to be 1.75ms, the polarizer rotates by 90° at the reception of the vertically polarized wave with respect to the revolution angle corrected by 5° at the reception of the horizontally polarized wave.

Furthermore, in the circuit shown in Fig. 10, the value of the current flowing through the coil 50 is determined by the voltage produced across both ends of the resistor R16. Even though the resistance value of the coil 50 of the polarizer 10B is changed in accordance with a temperature change, the current flowing through the polarizer is scarcely changed, thereby barely affecting the reception state. It is desirable to use a resistor having a small temperature coefficient as the resistor R16 in order to achieve such reliability.

As described in the foregoing, the embodiment of the present invention adjusts the pulse width of a control pulse signal supplied from an indoor unit to adjust a revolution angle of a polarizer, thereby enabling a reliable switching between a horizontally polarized radio wave receiving condition and a vertically polarized radio wave receiving condition even when an outdoor unit of a satellite broadcasting receiving system is set with a deviation with respect to a horizontal plane.

**Claims**

1.  A control circuit for controlling revolution of a polarizer (10B) having a polarization switching function in a satellite broadcast receiving system, said circuit comprising:

    resistor means (R16) provided in a current supply path to a coil (50) of the polarizer, for determining the amount of the current supplied to said coil according to a potential difference between both ends (57, 58) of the resistor means; means (55, 56, Q9-Q12) for applying first and second variable potentials respectively to said ends of the resistor means; and means (52, 53, 54) for driving the potential applying means in response to an externally supplied control signal to adjust said first and second potentials.

2.  A control circuit according to claim 1, wherein said potential applying means includes:

    a first operational amplifier (55) having an input terminal, a reference potential terminal connected to one end of said resistor means, and an output terminal coupled to one end of said coil, and a second operational amplifier (56) having an input terminal, a reference potential terminal connected to the other end of said resistor means, and an output terminal coupled to the other end of said coil; and

said potential adjusting means includes:
means (52, 53, 54) for supplying a variable potential difference between the input terminals of said first and second operational amplifiers.

3. A control circuit according to claim 2, wherein the variable potential difference supplying means includes:

means (52) for generating a voltage corresponding to a pulse width of said externally supplied control signal,
a third operational amplifier (53) for amplifying said voltage corresponding to the pulse width by a first gain, and
a fourth operational amplifier (54) for amplifying said voltage corresponding to the pulse width by a second gain,
wherein the potential difference between the outputs of said third and fourth operational amplifier is supplied as said variable potential difference.

## Patentansprüche

1. Steuerschaltung zum Steuern der Drehung eines Polarisators (10B) mit Polarisationsumschaltfunktion in einem Satellitenrundfunk-Empfangssystem, wobei die Schaltung folgendes aufweist:

- eine Widerstandseinrichtung (R16), die in einem Stromversorgungspfad einer Spule (50) des Polarisators vorhanden ist, um die Stärke des der Spule zugeführten Stroms abhängig von der Potentialdifferenz zwischen den beiden Enden (57, 58) der Widerstandseinrichtung zu bestimmen;
- eine Einrichtung (55, 56, Q9 - Q12) zum Anlegen eines ersten oder zweiten variablen Potentials an die Enden der Widerstandseinrichtung und
- eine Einrichtung (52, 53, 54) zum Ansteuern der Potentialanlegeeinrichtung auf ein extern zugeführtes Steuersignal hin, um das erste und zweite Potential einzustellen.

2. Steuerschaltung nach Anspruch 1, bei der die Potentialanlegeeinrichtung folgendes aufweist:

- einen ersten Operationsverstärker (55) mit einem Eingangsanschluß, einem mit einem Ende der Widerstandseinrichtung verbundenen Bezugspotentialanschluß und einem mit einem Ende der Spule verbundenen Ausgangsanschluß; und
- einen zweiten Operationsverstärker (56) mit einem Eingangsanschluß, einem mit dem anderen Ende der Widerstandseinrichtung verbundenen Bezugspotentialanschluß und einem mit dem anderen Ende der Spule verbundenen Ausgangsanschluß;
- wobei die Potentialeinstelleinrichtung eine Einrichtung (52, 53, 54) zum Liefern einer variablen Potentialdifferenz zwischen den Eingangsanschlüssen des ersten und zweiten Operationsverstärkers aufweist.

3. Steuerschaltung nach Anspruch 2, bei der die Einrichtung zum Liefern der variablen Potentialdifferenz folgendes aufweist:

- eine Einrichtung (52) zum Erzeugen einer Spannung, die der Impulsbreite des extern zugeführten Steuersignals entspricht;
- einen dritten Operationsverstärker (53) zum Verstärken der der Impulsbreite entsprechenden Spannung mit einer ersten Verstärkung; und
- einen vierten Operationsverstärker (54) zum Verstärken der der Impulsbreite entsprechenden Spannung mit einer zweiten Verstärkung;
- wobei die Potentialdifferenz zwischen den Ausgängen der dritten und vierten Operationsverstärkers als variable Potentialdifferenz geliefert wird.

## Revendications

1. Circuit de commande destiné à réguler la rotation d'un polariseur (10B) ayant une fonction de commutation de polarisation dans un système de réception d'émissions radiodiffusées par satellite, ledit circuit comprenant:

des moyens formant résistance (R16) prévus dans une branche d'alimentation en courant d'une bobine (50) du polariseur, pour fixer l'intensité du courant fourni à ladite bobine sur la base d'une différence de potentiel entre les deux extrémités (57, 58) des moyens formant résistance;
des moyens (55, 56, Q9 à Q12) pour appliquer respectivement auxdites extrémités des moyens formant résistance, un premier et un deuxième potentiel variable; et
des moyens (52, 53, 54) pour exciter les moyens d'application de potentiel en réponse à un signal de commande délivré de l'extérieur, afin qu'ils règlent lesdits premier et deuxième potentiels.

2. Circuit de commande selon la revendication 1, dans lequel lesdits moyens d'application de potentiel comprennent:

un premier amplificateur opérationnel (55) présentant une borne d'entrée, une borne de potentiel de référence reliée à une extrémité desdits moyens formant résistance, et une borne de sortie raccordée à une extrémité de ladite bobine, et

un deuxième amplificateur opérationnel (56) présentant une borne d'entrée, une borne de potentiel de référence reliée à l'autre extrémité desdits moyens formant résistance, et une borne de sortie raccordée à l'autre extrémité de ladite bobine; et

lesdits moyens de réglage de potentiel comprennent:

des moyens (52, 53, 54) pour fournir une différence de potentiel variable entre les bornes d'entrée desdits premier et deuxième amplificateurs opérationnels.

3. Circuit de commande selon la revendication 2, dans lequel les moyens fournissant une différence de potentiel variable comprennent:

des moyens (52) pour produire une tension correspondant à une largeur d'impulsion dudit signal de commande délivré de l'extérieur,

un troisième amplificateur opérationnel (53) destiné à amplifier, par un premier gain, ladite tension correspondant à la largeur d'impulsion, et

un quatrième amplificateur opérationnel (54) destiné à amplifier, par un deuxième gain, ladite tension correspondant à la largeur d'impulsion, la différence de potentiel entre les sorties desdits troisième et quatrième amplificateurs opérationnels étant fournie en tant que ladite différence de potentiel variable.

# FIG.1

# FIG. 2

# FIG. 3

FIG.4

# FIG.5

14

BS-IF

14B

25

23B          23

23C

PULSE

REGU-
LATOR

14A

26          23A

14D

20V

PULSE+
POWER
SOURCE
VOLTAGE

LNB

14C

27

# FIG.6

15.7V ± 0.1V

15 V

0.8~2.2 ms

18.5 ± 2.5ms

12

FIG.7

# FIG.8

| INPUT PULSE | DUTY | RECEIVE POLARIZATION | CURRENT | REVOLUTION ANGLE |
|---|---|---|---|---|
| | 1.1 ms | H | + 29.5mA | + 45 ° |
| | 1.45 ms | — | ± 0 mA | ± 0 ° |
| | 1.8 ms | V | - 29.5 mA | - 45 ° |

## FIG. 9

# FIG.10

EP 0 510 997 B1

FIG.11

OUTPUT VOLTAGE

OPERATIONAL AMPLIFIER 13
13

OPERATIONAL AMPLIFIER 14
14

0.8 V

0.8 V

4.0

| INPUT VOLTAGE / V | 1.8 | 2.3 | 2.8 |
| PULSE WIDTH / mS | 1.1 | 1.45 | 1.8 |